# EUROPEAN PATENT SPECIFICATION

(11) **EP 3 293 360 B1**
(45) Date of publication and mention of the grant of the patent: **29.10.2025**
(21) Application number: 17190654.8
(22) Date of filing: 12.09.2017
(51) Int. Cl.: F01D 11/00, F01D 11/02, F16J 15/3288, F16J 15/447

(54) **SEAL SYSTEM WITH PRIMARY AND SECONDARY SEAL ARRANGEMENT**
DICHTUNGSSYSTEM MIT PRIMÄRER UND SEKUNDÄRER DICHTUNGSANORDNUNG
SYSTÈME D'ÉTANCHÉITÉ AYANT UN AGENCEMENT D'ÉTANCHÉITÉ PRIMAIRE ET SECONDAIRE

(30) Priority: 13.09.2016 US 201662393867 P
(43) Date of publication of application: 14.03.2018
(73) Proprietor: RTX Corporation, Farmington, CT 06032 (US)
(72) Inventor: AMADOR, Armando, Wethersfield, CT Connecticut 06109 (US); SHUAIB, Nasr A., Watertown, MA Massachusetts 02472 (US); PARNIN, Francis, Suffeld, CT Connecticut 06078 (US); SHERIDAN, William G., Southington, CT Connecticut 06489 (US)
(74) Representative: Dehns

(56) References cited:
- EP-A1- 3 318 722
- EP-A1- 3 421 737
- EP-A2- 1 724 445
- WO-A1-02/21027
- RU-C1- 2 583 480
- US-A1- 2005 098 957
- US-A1- 2009 324 388
- US-A1- 2011 038 718
- US-A1- 2013 241 153
- US-A1- 2014 300 058

## Description

### BACKGROUND

The present disclosure relates to a gas turbine engine and, more particularly, to a seal system therefor.

Certain sections of gas turbine engines may operate at high temperatures and pressures and some engine components may be sensitive thereto. Typically, seal systems are positioned to prevent the high temperature and pressure air from flowing into sensitive areas and prevent the oil used for cooling and lubrication from escaping the compartment. Such seal system includes either carbon seals and to a lesser extent labyrinth seals.

Two fundamental purposes of bearing compartment seals are to protect the compartment and its components from the surrounding hostile air environment and to contain the oil within the compartment. Oil that weeps through the carbon seal may travel into the compressor system or turbine. This may not be acceptable since bleeding into the compressor may lead to imbalance concerns or customer bleed contamination while bleeding into the turbine may lead to thermal operational effects. Carbon seals may be prone to wear as a result of a various causes such as coning of the carbon element or seal seat, assembly variation, and operational conditions.

US 2009/324388, US 2005/098957, RU 2583480, US 2011/038718, US 2013/241153 may be useful in understanding the present disclosure.

### SUMMARY

The present invention provides an assembly of a gas turbine engine comprising a bearing compartment and a seal system to cap the bearing compartment according to claim 1.

The foregoing features and elements may be combined in various combinations without exclusivity, unless expressly indicated otherwise. These features and elements as well as the operation of the invention will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
Figure 1 is a schematic cross-section of a gas turbine engine;
Figure 2 is a longitudinal schematic sectional view of various bearing compartments that may utilize seal systems within the gas turbine engine shown in Figure 1;
Figure 3 is an expanded longitudinal schematic sectional view of a seal system according to one disclosed embodiment of the present invention;
Figure 4 is an expanded longitudinal schematic sectional view of a seal system according to one disclosed non-limiting embodiment;
Figure 5 is an expanded longitudinal schematic sectional view of a seal system according to one disclosed non-limiting embodiment;
Figure 6 is an expanded longitudinal schematic sectional view of a seal system according to one disclosed non-limiting embodiment;
Figure 7 is an expanded longitudinal schematic sectional view of a seal system according to one disclosed non-limiting embodiment;
Figure 8 is an expanded longitudinal schematic sectional view of a seal system according to one disclosed non-limiting embodiment;
Figure 9 is an expanded longitudinal schematic sectional view of a seal system according to one disclosed non-limiting embodiment;
Figure 10 is an expanded longitudinal schematic sectional view of a seal system according to one disclosed non-limiting embodiment;
Figure 11 is an expanded longitudinal schematic sectional view of a seal system according to one disclosed non-limiting embodiment;
Figure 12 is an expanded longitudinal schematic sectional view of a seal system according to one disclosed non-limiting embodiment; and
Figure 13 is an expanded longitudinal schematic sectional view of a seal system according to one disclosed non-limiting embodiment.

### DETAILED DESCRIPTION

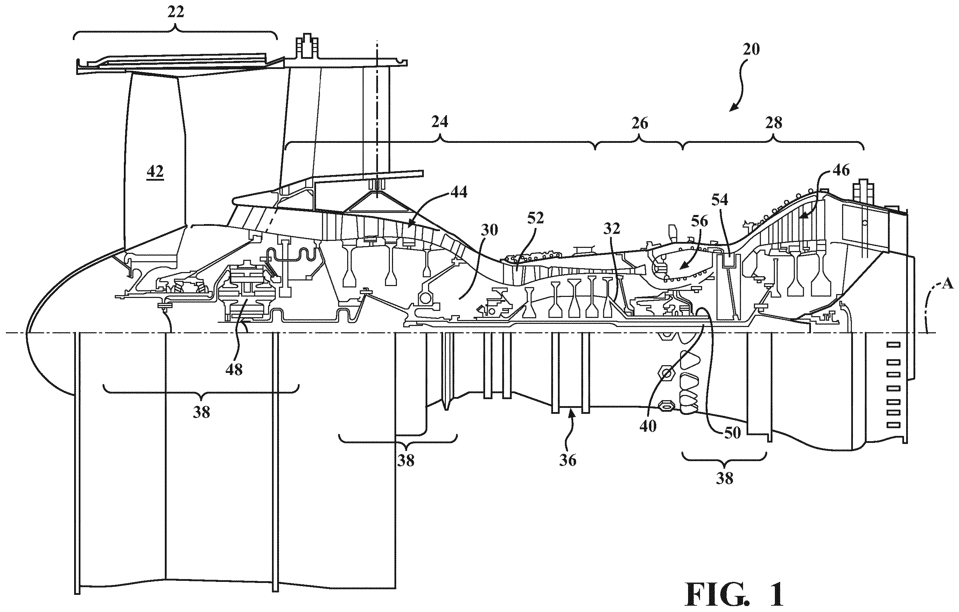

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engine architectures might include an augmentor section and exhaust duct section (not shown) among other systems or features.

The fan section 22 drives air along a bypass flowpath while the compressor section 24 drives air along a core flowpath for compression and communication into the combustor section 26 then expansion through the turbine section 28. Although depicted as a turbofan in the disclosed non-limiting embodiment, it should be understood that the concepts described herein are not limited to use with turbofans as the teachings may be applied to other types of turbine engines such as a low bypass augmented turbofan, turbojets, turbo shafts, and three-spool (plus fan) turbofans wherein an intermediate spool includes an intermediate pressure compressor ("IPC") between a Low Pressure Compressor ("LPC") and a High Pressure Compressor ("HPC"), and an intermediate pressure turbine ("IPT") between the high pressure turbine ("HPT") and the Low pressure Turbine ("LPT").

The engine 20 generally includes a low spool 30 and a high spool 32 mounted for rotation about an engine central longitudinal axis A relative to an engine static structure 36 via several bearing compartments 38. The low spool 30 generally includes an inner shaft 40 that interconnects a fan 42, a low pressure compressor 44 ("LPC") and a low pressure turbine 46 ("LPT"). The inner shaft 40 drives the fan 42 directly or through a geared architecture 48 to drive the fan 42 at a lower speed than the low spool 30. An exemplary reduction transmission is an epicyclic transmission, namely a planetary or star gear system. The high spool 32 includes an outer shaft 50 that interconnects a high pressure compressor 52 ("HPC") and high pressure turbine 54 ("HPT"). A combustor 56 is arranged between the HPC 52 and the HPT 54. The inner shaft 40 and the outer shaft 50 are concentric and rotate about the engine central longitudinal axis A which is collinear with their longitudinal axes.

Core airflow is compressed by the LPC 44 then the HPC 52, mixed with fuel and burned in the combustor 56, then expanded over the HPT 54 and the LPT 46. The turbines 54, 46 rotationally drive the respective low spool 30 and high spool 32 in response to the expansion. The main engine shafts 40, 50 are supported at a plurality of points by the bearing compartments 38. It should be understood that various bearing compartments 38 at various locations may alternatively or additionally be provided.

In one example, the gas turbine engine 20 is a high-bypass geared aircraft engine with a bypass ratio greater than about six (6:1). The geared architecture 48 can include an epicyclic gear train, such as a planetary gear system or other gear system. The example epicyclic gear train has a gear reduction ratio of greater than about 2.3:1, and in another example is greater than about 2.5:1. The geared turbofan enables operation of the low spool 30 at higher speeds which can increase the operational efficiency of the LPC 44 and LPT 46 to render increased pressure in a relatively few number of stages.

A pressure ratio associated with the LPT 46 is pressure measured prior to the inlet of the LPT 46 as related to the pressure at the outlet of the LPT 46 prior to an exhaust nozzle of the gas turbine engine 20. In one non-limiting embodiment, the bypass ratio of the gas turbine engine 20 is greater than about ten (10:1), the fan diameter is significantly larger than that of the LPC 44, and the LPT 46 has a pressure ratio that is greater than about five (5:1). It should be understood, however, that the above parameters are only exemplary of one embodiment of a geared architecture engine and that the present disclosure is applicable to other gas turbine engines including direct drive turbofans, where the rotational speed of the fan 42 is the same (1:1) of the LPC 44.

In one example, a significant amount of thrust is provided by the bypass flow path due to the high bypass ratio. The fan section 22 of the gas turbine engine 20 is designed for a particular flight condition - typically cruise at about 0.8 Mach and about 35,000 feet (10668M). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The relatively low Fan Pressure Ratio according to one example gas turbine engine 20 is less than 1.45. Low Corrected Fan Tip Speed is the actual fan tip speed divided by an industry standard temperature correction of ("T" / 518.7)^{0.5} in which "T" represents the ambient temperature in degrees Rankine. The Low Corrected Fan Tip Speed according to one example gas turbine engine 20 is less than about 1150 fps (351 m/s).

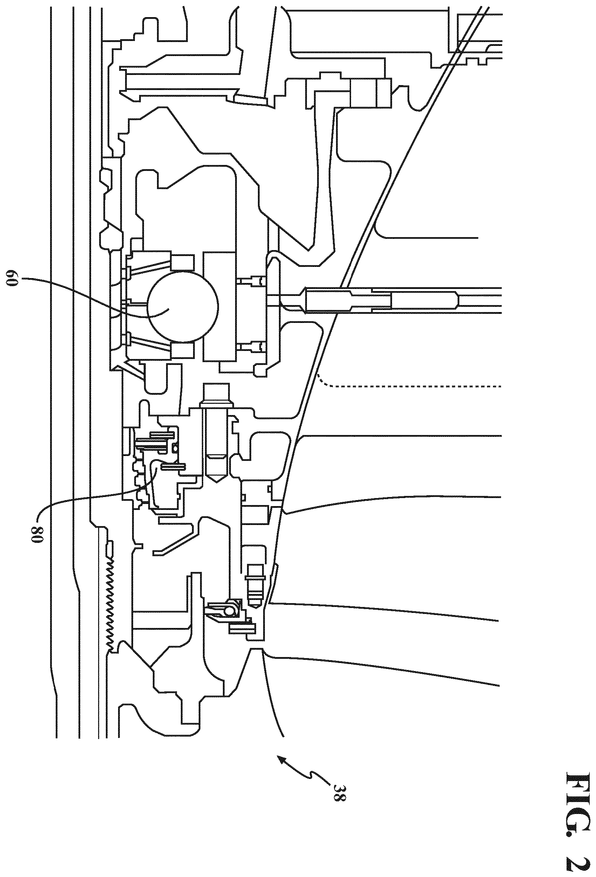

Each of a multiple of bearing compartments 38 include one or more bearings 60 (illustrated schematically) and one or more seal system 80 (illustrated schematically; Figure 2). The bearings 60 and seal system 80 respectively support and interface with the shafts 40, 50 of the respective low spool 30 and high spool 32.

The seal system 80 operates to seal a "wet" zone from a "dry" zone. In other words, regions or volumes that contain oil may be referred to as a "wet" zone and an oil-free region may be referred to as a "dry" zone. So, for example, the interior of each bearing compartment 38 may be referred to as a wet zone that ultimately communicates with an oil sump while the region external thereto may be referred to as a dry zone. That is, the bearings 60 support the low spool 30 and the high spool 32 and the seal system 80 separate the "wet" zone from the "dry" zone to define the boundaries of each bearing compartment 38. Although particular bearing compartments and bearing arrangements are illustrated in the disclosed non-limiting embodiment, other bearing compartments and bearing arrangements in other engine architectures such as three-spool architectures will also benefit herefrom.

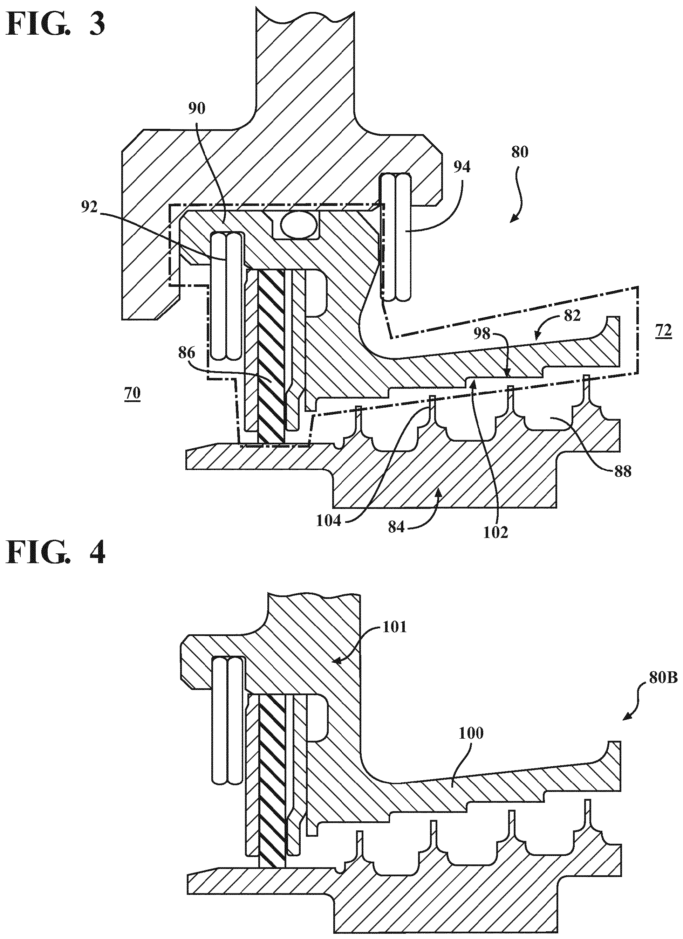

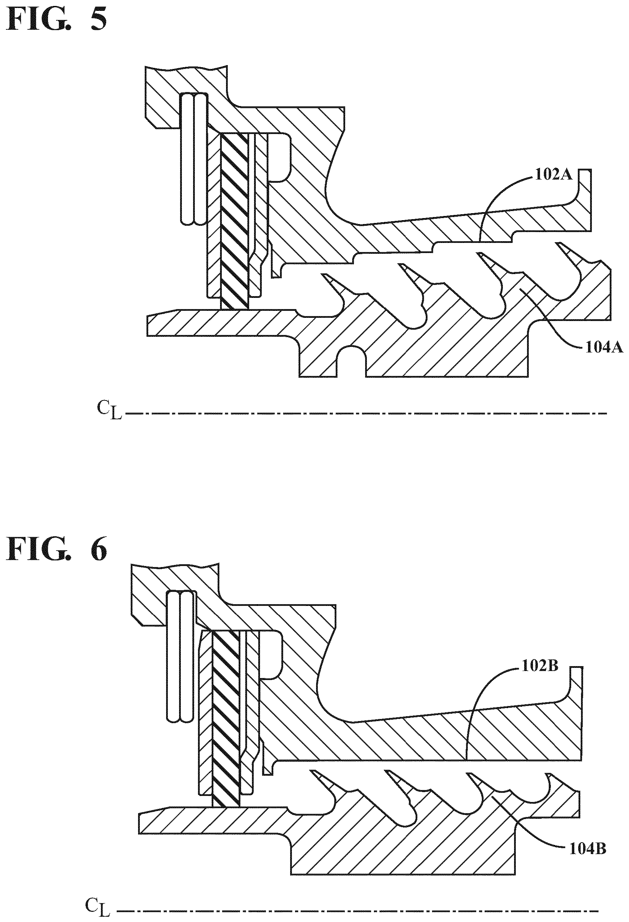

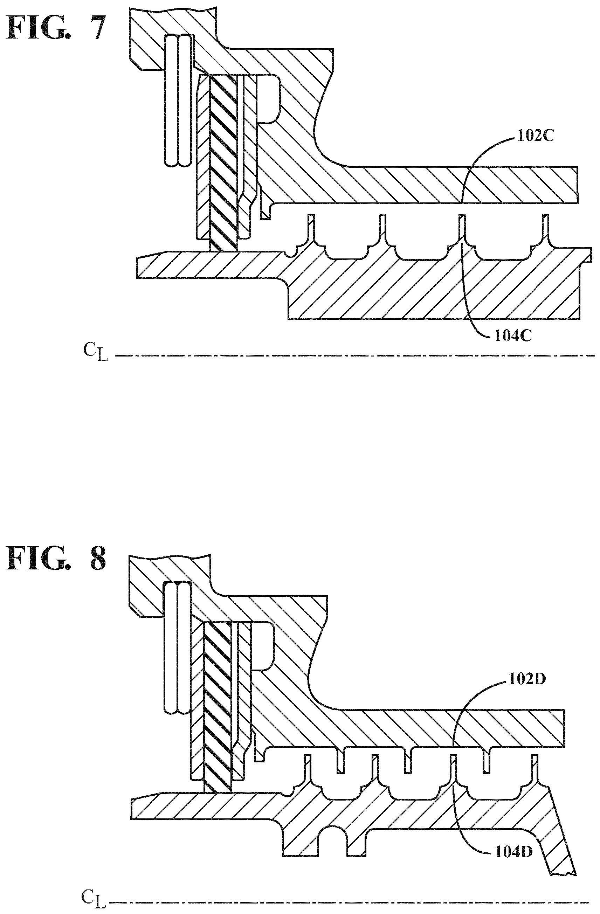

With reference to Figure 3, and according to an embodiment of the present invention, a seal system 80 generally includes a cartridge 82, a runner 84, a brush seal 86 between the cartridge 82 and the runner 84 and a labyrinth seal 88 between the cartridge 82 and the runner 84. The air side 70, or high pressure side, is located adjacent to the brush seal 86 which may be considered the primary seal while the bearing compartment 72 air/oil side may be considered the low pressure side adjacent to the labyrinth seal 88 which may be considered the secondary seal.
The seal system 80 is utilized to cap a bearing compartment (sump) for effective oil containment and preclude hot air ingestion into the bearing compartment. The seal system 80 provides essentially no limit to rotor speed, e.g., over 22,000 rpm; low to no oil cooling requirements at high temperature operating conditions, e.g., 1000F (538C); provides a torturous path for oil to egress; and maintains a healthy delta pressure at operating conditions. The cartridge 82 includes an extension 90 to receive a retention device 92 to retain the brush seal 86 in position. A retaining device 94 is mounted into a static structure to retain the cartridge 82. It should be appreciated that various retainers such as retaining rings, wires, nut(s), bolts, etc., may additionally be utilized. That is, a seal land extension 98 and the brush seal 86 are arranged as a mini-assembly installed into a larger structure. The cartridge 82 also includes a plurality of seal lands 102 that may be of various configurations such as a stepped (Figures 3, 4 and 5), a straight configuration (Figures 6 and 7) and staggered configuration (Figure 8). According to the present invention, the seal lands 102 are arranged in a stepped configuration. It should be appreciated that the shape, pitch number, and of the knife edges, as well as various combinations may alternatively be provided. Further, the knife edges can seal against metal or an abrade-able surface and the brush seal bristles can be either metallic, non-metallic material or combinations thereof.
The runner 84 includes a multiple of labyrinth seals 104 that interface with the respective seal lands 102. The labyrinth seals 104 may be of various configurations such as a stepped (Figures 2), a canted configuration (Figures 5 and 6), a staggered knife configuration (Figure 8) and a straight knife configuration (Figure 7). It should be appreciated that various combinations may alternatively be provided.

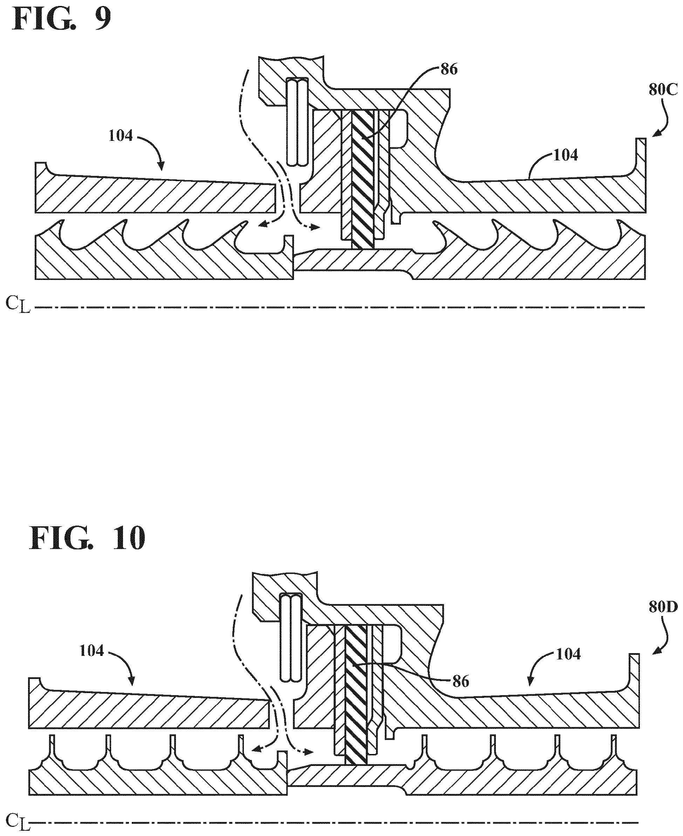

With reference to Figures 9-11, in other disclosed non-claimed embodiments, labyrinth seals 104 may be located to flank a single brush seal 86. In these embodiments, buffer air (illustrated schematically by arrows) may be communicated adjacent to the brush seal 86 on the air cavity side of the seal system 80A-80E.

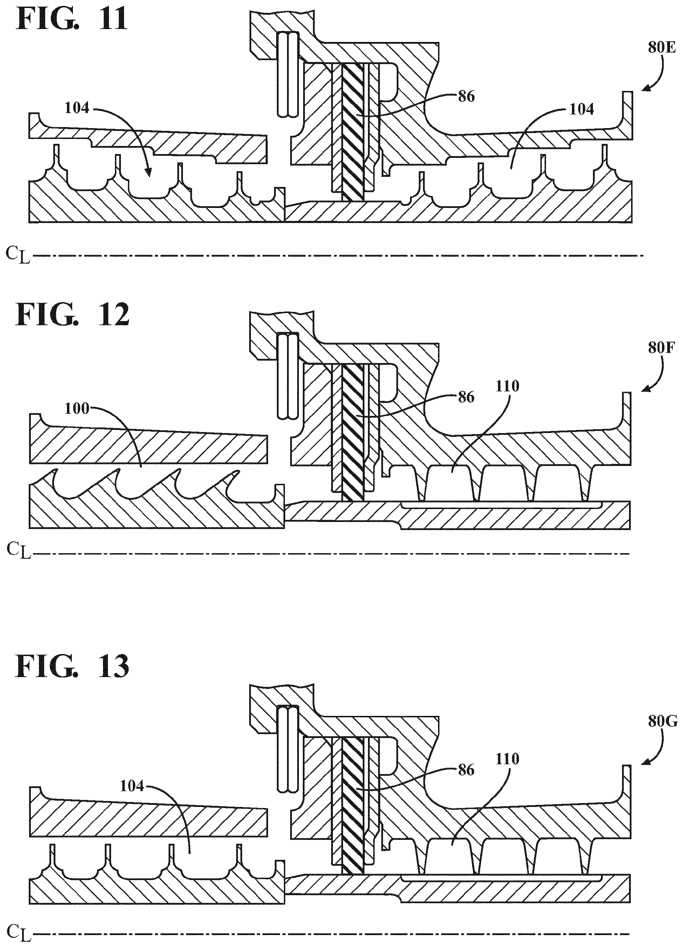

With reference to Figures 12-13, in other disclosed non-claimed embodiments, the seal system 80F, 80G may include a windback seal 110. Windback seals work similarly to labyrinth seals except for the effect of helical groove. These seals are essentially a tooth on stator or tooth on rotor labyrinth seal where the grooves are a continuous helical cut like a thread. Windback seals facilitate prevention of oil from a gas face seal area as these face seals cannot be contaminated by oil. A purge gas may be applied to the seal to force the oil back into the bearing area.

Although the different non-limiting embodiments have specific illustrated components, the embodiments of this disclosure are not limited to those particular combinations. It is possible to use some of the components or features from any of the non-limiting embodiments in combination with features or components from any of the other non-limiting embodiments.

It should be understood that relative positional terms such as "forward," "aft," "upper," "lower," "above," "below," and the like are with reference to the normal operational attitude of the vehicle and should not be considered otherwise limiting.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown and described, it should be understood that steps may be performed in any order, separated or combined unless otherwise indicated and will still benefit from the present disclosure.

The foregoing description is exemplary rather than defined by the limitations within. For that reason the appended claims should be studied to determine the scope of the present invention.

## Claims

1. An assembly of a gas turbine engine (20), the assembly comprising a bearing compartment (38) and a seal system (80) to cap the bearing compartment (38), the seal system (80) comprising:
a cartridge (82) including a plurality of seal lands (102) and an extension (90);
a retention device (92) received by the extension (90);
a runner (84) including a plurality of labyrinth seals (104);
a first seal (86) between the cartridge (82) and the runner (84), the first seal (86) being a brush seal that interfaces with the runner (84), wherein a high pressure side (70) external to the bearing compartment (38) is located adjacent to the brush seal (86) and
a second seal (88) between the cartridge (82) and the runner (84), wherein a low pressure side (72) of the bearing compartment (38) is located adjacent to the second seal (88), wherein the brush seal (86) is retained in position by the retention device (92), and the seal lands (102) are arranged in a stepped configuration and the second seal (88) comprises the plurality of labyrinth seals (104) that interface with the plurality of stepped seal lands (102),
**characterised by** of a retaining device (94) configured to retain the cartridge (82) on the low pressure side (72) and configured to be received in a radially outwardly extending groove of a static structure of the gas turbine engine (20),
wherein the cartridge (82) is configured to be retained on the high pressure side (70) by a radially inwardly extending flange of the static structure, and
wherein the retention device (92) is received in a radially outwardly extending groove of the extension (90) of the cartridge (82).

2. The assembly as recited in claim 1, wherein the labyrinth seals (104) are arranged in a stepped canted configuration.

3. The assembly as recited in claim 1, wherein the labyrinth seals (104) are arranged in a staggered knife configuration.

## Patentansprüche

1. Baugruppe eines Gasturbinentriebwerks (20), wobei die Baugruppe eine Lageraufnahme (38) und ein Dichtungssystem (80) zum Verschließen der Lageraufnahme (38) umfasst, wobei das Dichtungssystem (80) Folgendes umfasst:
eine Patrone (82), die eine Vielzahl von Dichtungsflächen (102) und eine Verlängerung (90) beinhaltet;
eine durch die Verlängerung (90) aufgenommene Haltevorrichtung (92) ;
einen Läufer (84), der eine Vielzahl von Labyrinthdichtungen (104) beinhaltet;
eine erste Dichtung (86) zwischen der Patrone (82) und dem Läufer (84), wobei die erste Dichtung (86) eine Bürstendichtung ist, die eine Schnittstelle mit dem Läufer (84) bildet, wobei sich eine Hochdruckseite (70) außerhalb der Lageraufnahme (38) benachbart zu der Bürstendichtung (86) befindet, und
eine zweite Dichtung (88) zwischen der Patrone (82) und dem Läufer (84), wobei sich eine Niederdruckseite (72) der Lageraufnahme (38) benachbart zu der zweiten Dichtung (88) befindet, wobei die Bürstendichtung (86) durch die Haltevorrichtung (92) in Position gehalten wird und die Dichtungsflächen (102) in einer gestuften Konfiguration angeordnet sind und die zweite Dichtung (88) die Vielzahl von Labyrinthdichtungen (104) umfasst, die eine Schnittstelle mit der Vielzahl von gestuften Dichtungsflächen (102) bildet,
**gekennzeichnet durch** eine Haltevorrichtung (94), die dazu konfiguriert ist, die Patrone (82) auf der Niederdruckseite (72) zu halten, und dazu konfiguriert ist, in einer sich radial nach außen erstreckenden Nut einer statischen Struktur des Gasturbinentriebwerks (20) aufgenommen zu werden,
wobei die Patrone (82) dazu konfiguriert ist, auf der Hochdruckseite (70) durch einen sich radial nach innen erstreckenden Flansch der statischen Struktur gehalten zu werden, und
wobei die Haltevorrichtung (92) in einer sich radial nach außen erstreckenden Nut der Verlängerung (90) der Patrone (82) aufgenommen ist.

2. Baugruppe nach Anspruch 1, wobei die Labyrinthdichtungen (104) in einer gestuften, geneigten Konfiguration angeordnet sind.

3. Baugruppe nach Anspruch 1, wobei die Labyrinthdichtungen (104) in einer gestaffelten Messerkonfiguration angeordnet sind.

## Revendications

1. Ensemble d'un moteur à turbine à gaz (20), l'ensemble comprenant un compartiment de palier (38)
et un système d'étanchéité (80) pour recouvrir le compartiment de palier (38), le système d'étanchéité (80) comprenant :
une cartouche (82) comprenant plusieurs zones d'étanchéité (102) et une extension (90) ;
un dispositif de retenue (92) reçu par l'extension (90) ;
un élément de guidage (84) comprenant plusieurs joints labyrinthes (104) ;
un premier joint (86) entre la cartouche (82) et le canal (84), le premier joint (86) étant un joint à brosse qui s'interface avec le canal (84), un côté haute pression (70) extérieur au compartiment de palier (38) étant situé à côté du joint à brosse (86) et
un second joint (88) entre la cartouche (82) et le canal (84), un côté basse pression (72) du compartiment de palier (38) étant situé à côté du second joint (88), le joint à brosse (86) étant maintenu en position par le dispositif de retenue (92), et les zones d'étanchéité (102) étant disposées en quinconce et le second joint (88) comprenant les différents joints labyrinthes (104) qui s'interfacent avec les différentes zones d'étanchéité en quinconce (102),
**caractérisé par** un dispositif de retenue (94) configuré pour retenir la cartouche (82) sur le côté basse pression (72) et configuré pour être reçu dans une rainure s'étendant radialement vers l'extérieur d'une structure statique du moteur à turbine à gaz (20),
dans lequel la cartouche (82) est configurée pour être retenue sur le côté haute pression (70) par une bride s'étendant radialement vers l'intérieur de la structure statique, et
dans lequel le dispositif de retenue (92) est reçu dans une rainure s'étendant radialement vers l'extérieur de l'extension (90) de la cartouche (82).

2. L'ensemble tel que décrit dans la revendication 1, dans lequel les joints labyrinthes (104) sont disposés en quinconce.

3. L'ensemble tel que décrit dans la revendication 1, dans lequel les joints labyrinthes (104) sont disposés en une configuration de couteaux en quinconce.
